# EUROPEAN PATENT SPECIFICATION

(11) **EP 3 453 580 B1**
(45) Date of publication and mention of the grant of the patent: **13.05.2020**
(21) Application number: 18188157.4
(22) Date of filing: 09.08.2018
(51) Int. Cl.: B60T 11/26, B60T 17/06, B65D 51/16

(54) **CAP ASSEMBLY AND RESERVOIR COMPRISING SAME**
KAPPENANORDNUNG UND RESERVOIR DAMIT
ENSEMBLE CAPUCHON ET RÉSERVOIR LE COMPRENANT

(30) Priority: 14.08.2017 CN 201710692984
(43) Date of publication of application: 13.03.2019
(73) Proprietor: Robert Bosch GmbH, 70442 Stuttgart (DE)
(72) Inventor: Wang, Wei, Suzhou, Jiangsu, 215021 (CN)

(56) References cited:
- WO-A1-2009/143310
- DE-A1- 2 429 704
- DE-A1- 3 728 542
- US-A- 5 347 813
- US-A- 5 860 708
- US-A1- 2003 062 371

## Description

### Technical field

The present application relates to a cap assembly, in particular a cap assembly for use on a brake fluid reservoir of a vehicle braking system.

### Background art

A vehicle braking system generally comprises a brake fluid reservoir installed in the engine compartment. The brake fluid reservoir has a brake fluid inlet tube part for supplying brake fluid into the brake fluid reservoir, and a cap assembly is installed on the inlet tube part.

It is necessary to provide sealing between the brake fluid inlet tube part and the cap assembly, in order to prevent leakage of brake fluid from the inlet tube part when the vehicle suddenly starts or accelerates or suddenly decelerates. In addition, gas exchange must be permitted between the brake fluid inlet tube part and the cap assembly; for example, in the abovementioned situations or when the brake fluid in the reservoir expands, the internal pressure of the reservoir will rise, and when this internal pressure reaches a predetermined value, the gas exchange can reduce the suddenly increased gas pressure in the reservoir.

In an existing cap assembly structure, a gas intake path allowing gas from the surroundings to enter the reservoir, and a gas discharge path allowing gas inside the reservoir to be discharged to the external air, are the same gas channel path. Since liquid brake fluid might be mixed into the discharged gas, it is very difficult for such a structure, in which the gas channel path is shared, to separate liquid brake fluid out of the discharged gas, so brake fluid sealing performance is considerably impaired. Furthermore, such a structure is also unable to return isolated liquid to the reservoir. DE 24 29 704 A1 discloses a cap assembly according to the preamble of claim 1.

It is hoped that the defects mentioned above can be overcome.

### Content of the invention

The aim of the present application is to provide a cap assembly structure having a gas intake channel separate from a gas discharge channel; the gas intake channel separate from the gas discharge channel enables liquid brake fluid to be separated out of discharged gas, with the isolated liquid brake fluid returning to the reservoir through the separate gas intake channel.

To this end, the present invention provides a cap assembly, as defined by the features of claim 1, comprising:
an outer cap, defining a central axis and comprising an outer cap base part and an outer cap peripheral part which projects substantially perpendicularly from a periphery of the outer cap base part to define an internal space; and
an internal structure supported in the internal space, with a gas passageway in communication with external air being defined between the internal structure and the outer cap, the internal structure comprising a two-way vent hole extending to the vicinity of the outer cap base part and a one-way vent hole disposed remotely from the outer cap base part,
the two-way vent hole being constructed to allow air in a tube member to be discharged into external air via the two-way vent hole and the gas passageway, thereby defining a gas discharge path, when the tube member is mounted to the cap assembly in a gas-tight fashion, and being constructed to allow external air to enter the tube member via the gas passageway and the two-way vent hole, thereby defining a first gas intake path; and the one-way vent hole being constructed to allow external air to enter the tube member via the gas passageway and the one-way vent hole, thereby defining a second gas intake path, but to prohibit air in the tube member from being discharged into external air via the one-way vent hole.

The cap assembly according to the present invention has a gas intake path separate from the gas discharge path; the gas discharge path comprises the two-way vent hole disposed close to the outer cap base part, and the gas intake path comprises the one-way vent hole disposed remotely from the outer cap base part. Such a structure enables liquid brake fluid to be separated out of discharged gas from the reservoir, and allows the isolated brake fluid to flow back to the reservoir through the one-way vent hole of the gas intake path, achieving the objective of preventing brake fluid leakage.

The present invention also provides a reservoir comprising an inlet tube member for introducing brake fluid, and the cap assembly described above; when mated with each other, the cap assembly and the inlet tube member prevent liquid in the reservoir from leaking, allow external air to enter the reservoir, and allow air in the reservoir to be discharged to external air.

### Description of the accompanying drawings

The abovementioned aspects and other aspects of the present application will be understood more completely through the following detailed presentation which makes reference to the accompanying drawings. The demonstrative embodiments shown in the drawings are purely for illustrative purposes; they are not intended to limit the scope of protection of the present invention. Those skilled in the art should understand that components shown in the drawings need not be present in all embodiments, and components not shown in the drawings might be included in some embodiments of the present invention. In the drawings:
Fig. 1 is a partial enlarged sectional view of a cap assembly according to a first embodiment of the present invention, mated with an inlet tube member of a vehicle brake fluid reservoir.
Fig. 2 is a sectional view of the cap assembly according to the first embodiment of the present invention.
Fig. 3 is a three-dimensional view of an outer cap of the cap assembly according to the first embodiment of the present invention.
Fig. 4 is a three-dimensional view of a supporting member of an internal structure of the cap assembly according to the first embodiment of the present invention.
Fig. 5 is a three-dimensional view of a stopper-like member of the internal structure of the cap assembly according to the first embodiment of the present invention.
Fig. 6 is a schematic diagram of a gas discharge channel of the cap assembly according to the first embodiment of the present invention.
Fig. 7 is a schematic diagram of a gas intake channel of the cap assembly according to the first embodiment of the present invention.
Fig. 8 is a sectional view of a cap assembly according to a second embodiment of the present invention.

### Particular embodiments

The cap assembly according to the present invention is mainly used for being fitted to, and fluid-sealed with, a brake fluid reservoir of a vehicle. Specifically, the cap assembly is fitted to, and fluid-sealed with, an inlet tubular connector of the brake fluid reservoir (referred to as a "tube member" hereinbelow). However, those skilled in the art should understand that the cap assembly of the present invention is not only applied to a brake fluid reservoir of a vehicle, but is suitable for any similar reservoir having the same functional requirements.

First of all, when used together with the reservoir, i.e. when mated with the tube member of the reservoir, the cap assembly of the present invention provides a dedicated gas intake channel which is separate or at least partially separate from a gas discharge channel. Specifically, the cap assembly of the present invention provides a shared gas intake/discharge passageway which allows air inside the reservoir to be discharged into the external air and allows external air to enter the reservoir, and in addition also provides another dedicated gas intake passageway causing external air to enter the reservoir. The shared gas intake/discharge passageway comprises a two-way vent hole and the gas intake passageway comprises a one-way vent hole; the one-way vent hole prohibits air inside the reservoir from passing through and being discharged into the external air. According to an embodiment of the present invention, the shared gas intake/discharge passageway coincides with a part of the dedicated gas intake passageway, i.e. the two passageways have a coincident, shared gas channel section.

Secondly, in the case where liquid is mixed into discharged gas, the cap assembly of the present invention can separate the liquid from the discharged gas before the latter is discharged from the cap assembly, and allows the intercepted liquid to flow back to the reservoir via a part of the dedicated gas intake passageway comprising the one-way vent hole. In the present text, "air" or "discharged gas" discharged from the reservoir to the external air should be interpreted as a gas/liquid mixture with a small amount of liquid brake fluid mixed therein, and the "one-way vent hole" should be interpreted as prohibiting the "discharged gas" from being discharged and passing through, but allowing gas ("intake gas" coming from the surroundings and containing no liquid) and liquid (e.g. liquid brake fluid separated out of "discharged gas") to enter the reservoir in the opposite direction.

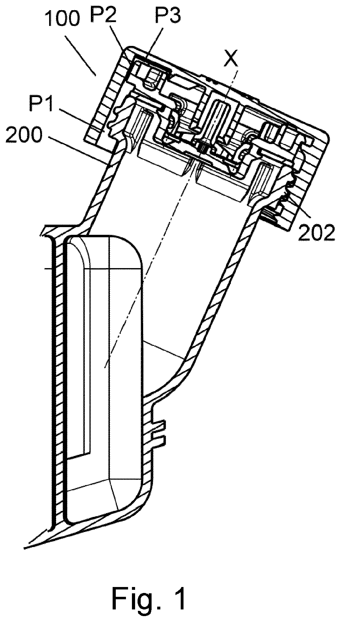

A first embodiment of a cap assembly according to the present invention is described in detail below with reference to figs. 1 - 7.

Fig. 1 shows schematically a schematic diagram of a cap assembly 100 according to the first embodiment of the present invention connected to a tube member 200 of a vehicle brake fluid reservoir. During use, the cap assembly 100 might be in an inclined state as shown in fig. 1, while the tube member 200 might not be positioned vertically. The cap assembly 100 and the tube member 200 have substantially the same central axis X.

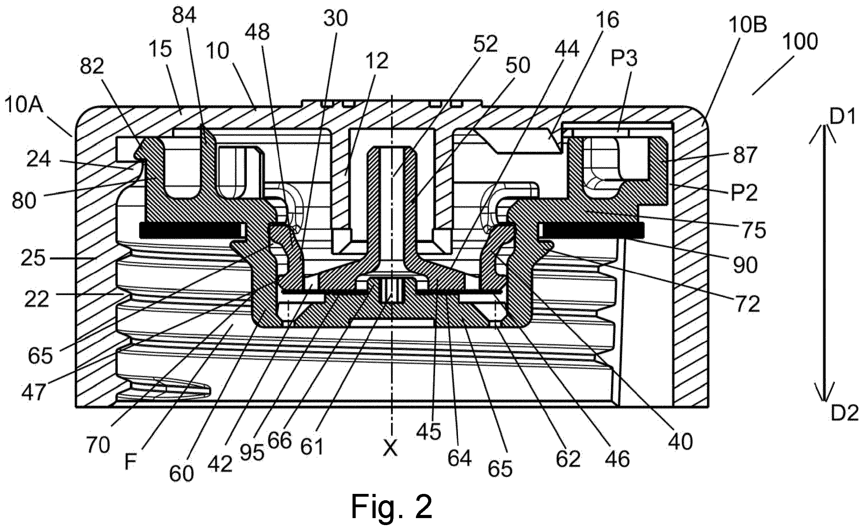

Referring to fig. 2, the cap assembly according to the present invention mainly comprises an outer cap 10, which defines the central axis X and an internal space F; and an internal structure 30 supported in the internal space F by means of the outer cap 10. In this first embodiment, the internal structure 30 mainly comprises a stopper-like member 40 for guiding flow of a gas, and a supporting member 60. The tube member 200, which has substantially the same central axis, is adapted to be mated to the cap assembly in a gas-tight fashion, e.g. in the first embodiment of the present invention, the tube member 200 is partially received in the internal space F. In particular, in the embodiment shown in the figure, the tube member 200 is mated in a sealed fashion to the supporting member 60 of the internal structure 30 by means of an annular seal 90. In the following text, a direction of extension along the central axis X is defined as an axial direction, and a direction of revolution around the central axis X is defined as a circumferential direction.

The outer cap 10 mainly comprises an outer cap peripheral part 25 and an outer cap base part 15 defining the internal space F; the outer cap base part 15 defines a closed end of the internal space F, and the outer cap peripheral part 25 defines an open end of the internal space F. In the embodiment shown in the figure, the outer cap peripheral part 25 extends substantially perpendicularly in the axial direction from the outer cap base part 15, specifically from a radially outermost periphery of the outer cap base part 15. In the present text, to facilitate description, an axial direction from the tube member 200 towards the outer cap base part 15 of the outer cap 10 in an assembled state of the cap assembly 10, i.e. an axial direction towards the outer cap base part 15, is defined as a first axial direction D1; an axial direction opposite to the first axial direction D1, i.e. an axial direction facing away from the outer cap base part 15 of the outer cap 10, is defined as a second axial direction D2. In this sense, the outer cap peripheral part 25 of the outer cap 10 extends from the outer cap base part 15 in the second axial direction D2.

The outer cap peripheral part 25 of the outer cap 10 comprises an internal screw-thread 22 protruding radially inward from an inner peripheral surface thereof; correspondingly, the tube member 200 has an external screw-thread 202 (fig. 1). By mating the external screw-thread 202 of the tube member 200 with the internal screw-thread 22 of the outer cap 10, the cap assembly 100, specifically the outer cap 10, is connected by screw-thread to the tube member 200, until an end of the tube member 200 abuts the annular seal 90 of the supporting member 60 and thereby realizes gas-tight sealing at a mating face of that end.

However, the internal screw-thread 22 of the outer cap 10 only extends over a part of the circumference of the outer cap peripheral part 25 in the circumferential direction, not over the entire circumference of the inner peripheral surface of the outer cap peripheral part 25. On a circumferential part without the internal screw-thread 22 on an inner surface of the outer cap peripheral part 25, a first gas passageway P1 in communication with external gas is formed between the outer cap peripheral part 25 and the tube member 200 received in the internal space F (fig. 1).

To facilitate description here, a side on which the internal screw-thread 22 of the outer cap 10 is located in the circumferential direction may be defined as a first sealed side 10A, and a side without the internal screw-thread 22, opposite to the first sealed side 10A relative to the central axis X, may be defined as a second vent side 10B. In other words, on the first sealed side 10A of the outer cap 10, the tube member 200 is connected by screw-thread to the outer cap peripheral part 25; on the second vent side 10B of the outer cap 10, the first gas passageway P1 is formed between the tube member 200 and the outer cap 10, specifically the outer cap peripheral part 25 of the outer cap 10. Preferably, the length of circumferential extension of the internal screw-thread 22 of the outer cap 10 far exceeds half of the circumferential length of the inner peripheral surface of the outer cap peripheral part 25.

In addition, on the first sealed side 10A of the outer cap 10, the internal structure 30, specifically the supporting member 60, is supported by the outer cap 10 by means of a shape-fitting structure. Specifically, the outer cap 10, on the first sealed side 10A thereof, comprises a protrusion 24 protruding radially inward from the inner peripheral surface of the outer cap peripheral part 25 of the outer cap; correspondingly, the supporting member 60 of the internal structure 30 comprises a hook-like part 82. The hook-like part 82 of the supporting member 60 and the protrusion 24 of the outer cap 10 extend a certain length in the circumferential direction respectively, such that when the hook-like part 82 and the protrusion 24 are mated with each other, the internal structure 30 can be firmly supported on the outer cap 10.

In a preferred embodiment, in the axial direction, the hook-like part 82 is fitted by interference fit to an inner surface of the outer cap base part 15 of the outer cap 10, so as to realize gas-tight sealing at mating faces of the two components. More preferably, in order to realize or enhance the gas-tight effect between the outer cap 10 and the supporting member 60 on the first sealed side 10A of the outer cap 10, the supporting member 60 further comprises an axial extension 84, which extends in the first axial direction D1 at a radially inward position until it mates in a sealed fashion with, e.g. is sealed in a gas-tight fashion by interference fit with, the outer cap base part 15 of the outer cap 10. The axial extension 84 extends in the entire circumferential direction.

On the second vent side 10B of the outer cap 10, the supporting member 60 of the internal structure 30 does not come into contact or mate with the outer cap 10 in the circumferential direction, but defines a second gas passageway P2 in communication with the first gas passageway P1. In addition, on this side, the supporting member 60 of the internal structure 30 does not come into contact or mate with the outer cap 10 at an axial end close to the outer cap base part 15 of the outer cap 10, thereby defining a third gas passageway P3 in gas communication with the second gas passageway P2; this may be realized by causing the inner surface of the outer cap base part 15 to be partially sunken, as shown in fig. 2.

In other words, on the first sealed side 10A of the outer cap 10, the supporting member 60 of the internal structure 30 is mated with the outer cap 10 in a gas-tight sealed fashion; on the second vent side 10B of the outer cap 10, the third gas passageway P3 and the second gas passageway P2 are formed between the supporting member 60 and the outer cap 10, and the first gas passageway P1 is formed between the tube member 200 and the outer cap 10. In other words, when the tube member 200 is mated in a sealed fashion with the supporting member 60 of the cap assembly 100 by means of the annular seal 90, all gas exchange between the reservoir and the surroundings takes place via the gas passageways PI, P2 and P3 on the second vent side 10B of the outer cap 10. In this first embodiment, the gas passageways PI, P2 and P3 are a coincident, shared section of the shared gas intake/discharge passageway and the dedicated gas intake passageway.

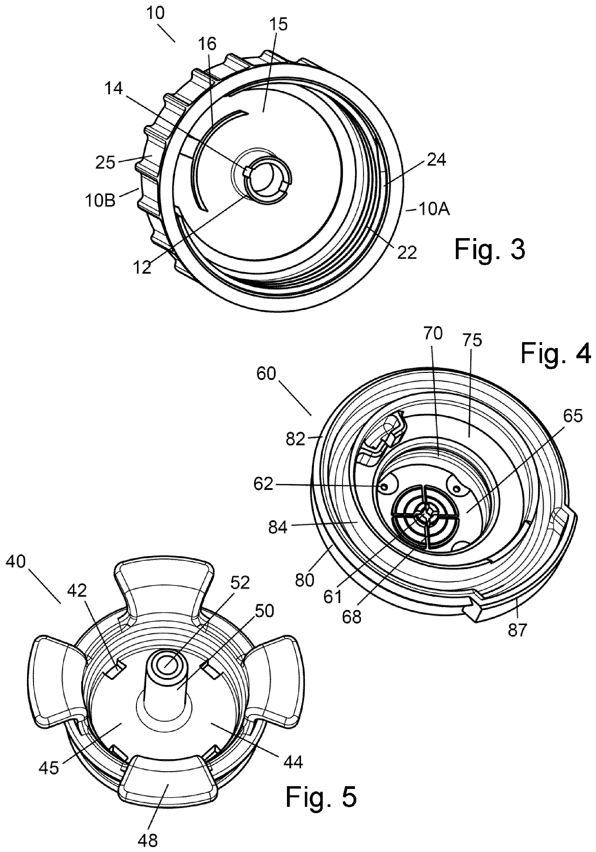

It can also be seen from the figure that the outer cap base part 15 of the outer cap 10 is further provided with a substantially tubular gas flow guiding part 12, which projects in the second axial direction D2 from a substantially central position of the outer cap base part; the gas flow guiding part 12 has a first end connected to the outer cap base part 15, and an opposite free end. The length of axial extension of the gas flow guiding part 12 is designed so that the free end of the gas flow guiding part 12 is substantially not in contact with the stopper-like member 40. The gas flow guiding part 12 comprises a vent groove 14 located at the free end thereof. The vent groove 14 extends through a radial thickness of the substantially tubular gas flow guiding part 12. Two symmetric vent grooves 14 may be provided as shown in fig. 3, but those skilled in the art should understand that this is not necessary.

In addition, on the second vent side 10B of the outer cap 10, i.e. the side on which the gas passageways P2 and P3 are located, the outer cap 10 further comprises a stop plate 16 projecting from the outer cap base part 15; the stop plate 16 is located radially outside the gas flow guiding part 12, and may project from the outer cap base part 15 in any way. As an example, the stop plate 16 may project from the outer cap base part 15 in the second axial direction D2 or in an inclined fashion relative to the axial direction. The stop part 16 may have any cross-sectional area and dimensions, and the stop part 16 may be in the form of a flat plate or in the form of an arcuate plate curved in the circumferential direction.

Constituent components of the internal structure 30 of the present invention are described in detail below.

As described above, the supporting member 60 of the internal structure 30 is asymmetric in rotation around the central axis X, being supported on the outer cap 10 in a gas-tight sealed fashion on the first sealed side 10A of the outer cap 10 by means of the hook-like part 82 and axial extension 84 of the supporting member, and defining the second gas passageway P2 together with the outer cap 10 on the second vent side 10B of the outer cap 10.

Specifically, the supporting member 60 comprises a large-diameter section and a small-diameter section which are integral with one another. The small-diameter section comprises a radial base part 65 defining a penetrating vent hole 62, and a barrel part 70 extending from the radial base part 65 in the first axial direction D1. There are four vent holes 62, distributed substantially uniformly around the central axis X in the circumferential direction; however, those skilled in the art should understand that the shape, dimensions, quantity and manner of arrangement of the vent holes 62 are not restricted to those shown in the figures.

The radial base part 65 defines a flat surface 64 on the side on which the barrel part 70 projects, for abutting the stopper-like member 40 of the internal structure 30. The surface 64 comprises a protrusion 66 protruding outward at a substantially central position thereon, and a central hole 61 disposed on the protrusion 66. At least one radial groove, e.g. multiple radial grooves 68 (fig. 4) extend radially inward to the central hole 61 from a radially outer edge of the surface 64. In the embodiment shown in the figure, the surface 64 is provided with four radial grooves 68 distributed uniformly in the circumferential direction.

The barrel part 70 of the small-diameter section further comprises a seal retaining part 72, which extends radially outward from an outer peripheral surface of the barrel part and is used for supporting and fixing the annular seal 90. Depending on requirements, the seal retaining part 72 may extend in its entirety in the circumferential direction, or may be constructed as multiple circumferential sections or lugs distributed in the circumferential direction.

The large-diameter section of the supporting member 60 comprises a radial abutment part 75 connected to the barrel part 70 of the small-diameter section, and a circumferential part 80 extending away from the small-diameter section in the first axial direction D1 from the radial abutment part 75. On the first sealed side 10A of the outer cap 10, the hook-like part 82 of the supporting member 60 extends radially outward from an axial free end of the circumferential part 80; on the second vent side 10B of the outer cap 10, the radial distance of the circumferential part 80 of the supporting member 60 from the central axis X is increased, as indicated by the reference label 87 in figs. 2 and 4. In other words, in a plane perpendicular to the central axis X, the cross-sectional shape of the circumferential part 80 is not circular.

In a radial interior of the circumferential part 80, the axial extension 84 extends in the first axial direction D1 from the radial abutment part 75. In the abovementioned plane, the axial extension 84 may have a circular cross section. On the first sealed side 10A, the axial extension 84 forms an interference fit with the inner surface of the outer cap base part 15; on the second vent side 10B of the outer cap 10, the inner surface of the outer cap base part 15 is sunken so as to form the third gas passageway P3 together with the axial extension 84.

The stopper-like member 40 of the internal structure 30 is installed in the supporting member 60, specifically, installed in the barrel part 70 of the small-diameter section of the supporting member 60 in a substantially central position relative to the central axis X, and sits against the surface 64 of the radial base part 65. The stopper-like member 40 is constructed as a component which is symmetrical in rotation around the central axis X, as shown in fig. 5.

The stopper-like member 40 comprises a stopper base part 45, which extends substantially radially and is adapted for contact with the surface 64 of the supporting member 60, and a stopper column part 50 extending substantially axially from a substantially central position of the stopper base part 45.

The stopper base part 45 comprises a vent hole 42 extending through the stopper base part 45 in the axial direction on a radially outer side of the stopper column part 50; the stopper column part 50 comprises a central vent hole 52 extending through the stopper-like member 40 at a substantially central position of the stopper column part 50. The stopper base part 45 is formed with a substantially conical radial surface 44 on a side facing the outer cap base part 15, and a flat surface 46 on an opposite side facing away from the outer cap base part 15; the substantially conical radial surface 44, beginning at an outer peripheral surface of the stopper column part 50, slopes towards the flat surface 46 while extending radially outwards, in order to have the effect of guiding gas and/or liquid, e.g. guiding gas and/or liquid into the vent hole 42. In the embodiment shown in the figure, there are four vent holes 42, distributed uniformly in the circumferential direction.

The central vent hole 52 is used as the abovementioned two-way vent hole, allowing gas to pass in the first and second axial directions D1 and D2. The vent holes 42 arranged in the circumferential direction are covered by an annular membrane member 95 on a side facing the tube member 200 fitted to the cap assembly 100. The annular membrane member 95 has the characteristic of allowing gas and liquid to pass in one direction, and, in this embodiment, prohibits discharged gas containing a small amount of liquid from passing in the first axial direction D1 but allows gas or liquid to enter the tube member 200 in the second axial direction D2; thus the vent hole 42 covered by the annular membrane member 95 may be called a one-way vent hole.

On a radially outer side of the vent holes 42, a mounting part 48 of the stopper-like member 40 projects in the first axial direction D1 from a substantially radially outer periphery of the stopper base part 45, and at the same time slopes radially outward. The mounting part 48 may be constructed as multiple lugs spaced apart in the circumferential direction; for example, as shown in fig. 5, there are four mounting parts 48 in the form of lugs, spaced apart uniformly in the circumferential direction. Correspondingly, a recess 65 for receiving the mounting part 48 of the stopper-like member 40 is formed on an inner peripheral surface of the barrel part 70 of the small-diameter section of the supporting member 60. The recess 65 may extend in the circumferential direction in its entirety; however, preferably, in order that the positions of the vent hole 42 of the stopper-like member 40 and the vent hole 62 of the supporting member correspond to each other in the circumferential direction, the quantity and circumferential position(s) of the recess(es) 65 correspond to the mounting part(s) 48.

The stopper base part 45 of the stopper-like member 40 has an outer flange 47 which is press-fitted to the inner peripheral surface of the barrel part 70 of the supporting member 60, so that gas-tight sealing is realized in the circumferential direction between the two components.

In the assembled state of the cap assembly 100 shown in fig. 1, the internal structure 30 formed by the stopper-like member 40 and the supporting member 60 is supported by the outer cap 10 by means of the mating of the hook-like part 82 of the supporting member 60 with the protrusion 24 of the outer cap 10, and is mated in a gas-tight fashion with the outer cap base part 15 by means of the axial extension 84; at the same time, the gas passageways P2 and P3 are formed between the internal structure 30 and the outer cap 10 on the second vent side 10B of the outer cap 10. The mounting part 48 of the stopper-like member 40 is mounted in the recess 65 of the supporting member 60, and the entire circumferential outer flange 47 of the stopper base part 45 of the stopper-like member 40 is fitted in a sealed fashion to the barrel part 70 of the supporting member 60. Furthermore, the stopper column part 50 of the stopper-like member 40 extends into the substantially tubular gas flow guiding part 12, and so has an axial length of extension to the vicinity of the outer cap base part 15.

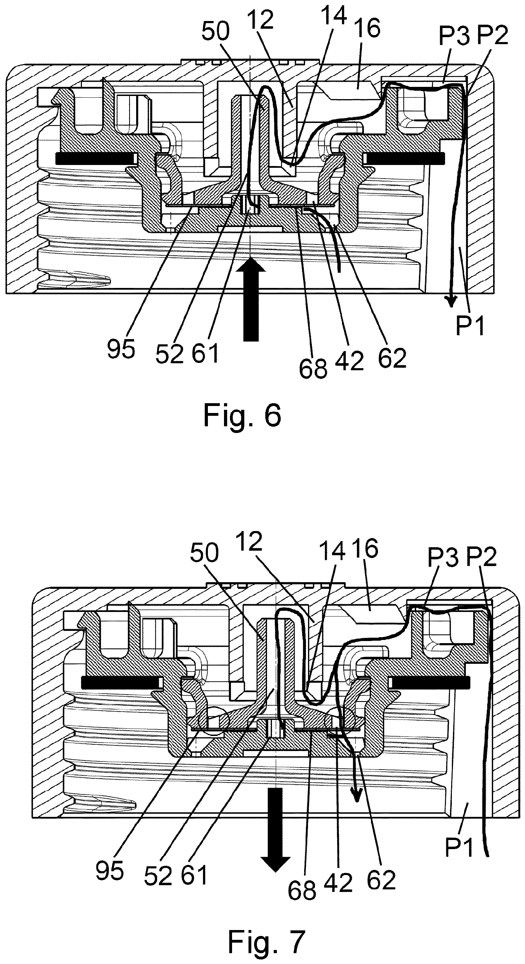

A gas discharge path, i.e. the shared gas intake/discharge passageway, in the cap assembly 100 is represented schematically by a black solid line with an arrow in fig. 6. The thick black solid line represents discharged gas coming from the tube member (not shown in fig. 6) which is mated in a sealed fashion with the annular seal 90 of the cap assembly 100; the thin solid line represents a gas discharge channel of the cap assembly 100, i.e. the shared gas intake/discharge passageway mentioned above. As can be seen in the figure, when gas pressure in the tube member rises, air in the tube member passes through the vent hole 62 of the supporting member 60, the radial groove 68 and central hole 61 of the supporting member 60, the central vent hole 52 of the stopper-like member 40, a gap between the stopper column part 50 of the stopper-like member 40 and the gas flow guiding part 12 of the outer cap 10, and the vent groove 14 on the gas flow guiding part 12, passes round the stop part 16, and is discharged into the external air via the gas passageways P3, P2 and P1; the gas discharge path is thereby formed.

In the course of this process, since the vent hole 42 covered by the annular membrane member 95 does not allow air inside the tube member to pass in the first axial direction D1, discharged air can only flow to the vicinity of the outer cap base part 15 via the central vent hole 52 of the stopper-like member 40; due to the provision of the gas flow guiding part 12, discharged gas is guided away from the outer cap base part 15 towards the one-way vent hole 42, so that a small amount of liquid mixed into the discharged gas easily falls to the conical surface 44 and flows to the one-way vent hole 42; and the provision of the stop part 16 further causes a small amount of liquid mixed into the discharged gas to fall back and enter the one-way vent hole 42, avoiding the brake fluid leakage mentioned in the prior art.

A gas intake channel in the cap assembly 100 is represented schematically by a black solid line with an arrow in fig. 7. First of all, the gas discharge channel is also used as a gas intake channel, therefore external air can follow a path opposite to the gas discharge path and enter the tube member 200, as shown in the figure; no further detailed description of this is given here. Secondly, due to the presence of the gas flow guiding part 12 and the characteristic of the annular membrane member 95 on the one-way vent hole 42 of allowing the passage of gas in the second axial direction D2, entering gas can more easily enter the tube member via the vent hole 42; a second gas intake path is thereby formed.

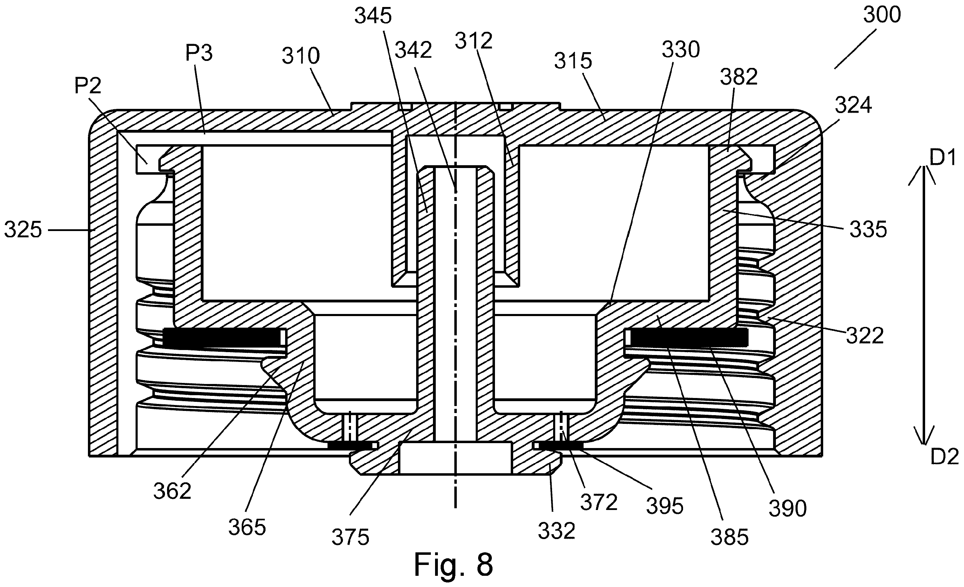

The first embodiment of the present invention has been described above with reference to figs. 1 - 7, wherein the internal structure 30 is formed by the stopper-like member 40 and the supporting member 60. Unlike this, in a second embodiment in fig. 8, an internal structure 330 of a cap assembly 300 only comprises a single component, in which the functions of the stopper-like member 40 and the supporting member 60 are integrated.

Referring to fig. 8, the cap assembly 300 comprises an outer cap 310 substantially identical to the outer cap 10, and the one-piece internal structure 330 located in an internal space of the outer cap 310.

Similarly to the outer cap 10 in the first embodiment, the outer cap 310 comprises an outer cap base part 315 and an outer cap peripheral part 325, and also comprises a gas flow guiding part 312. Also similarly to the outer cap 10, on the outer cap 310, a screw-thread 322 for connecting the tube member 200 and a protrusion 324 for supporting the internal structure 330 extend radially inward from an internal peripheral surface of the outer cap peripheral part 325, and both extend over a part of the circumference of the outer cap peripheral part 325 in the circumferential direction, so that when they are mated with the tube member 200 and the internal structure, first and second gas passageways P1 and P2 are formed.

The internal structure 330 provides a radial base part 375 having multiple vent holes 372, provides a radial abutment part 385 adapted for abutment with the tube member 200, and provides a circumferential part 335 extending in the first axial direction D1 from the radial abutment part 385; the radial base part 375 and the radial abutment part 385 are connected by means of a barrel part 365. A columnar part 345 extends in the first axial direction D1 from a substantially central position of the radial base part 375 and provides a central hole 342. The central hole 342 extends into the gas flow guiding part 312 so that a free end thereof is close to the outer cap base part 315. The central hole 342 allows gas to flow through in the two opposite axial directions D1 and D2, but the vent holes 372 arranged in the circumferential direction are covered by an annular membrane member 395 which prohibits the passage of gas in the first axial direction D1 but allows the passage of gas in the second axial direction D2, thereby forming one-way vent holes; correspondingly, the radial base part 375 of the internal structure 330 comprises a retaining part 332 adapted to retain and fix the annular membrane member 395. Furthermore, similarly to the first embodiment, the barrel part 365 comprises a seal retaining part 362 which extends radially outward from an outer peripheral surface thereof.

The circumferential part 335 comprises a hook-like part 382 for mating with the protrusion 324 of the outer cap 310; the hook-like part 382 may extend over the entire circumferential direction, or only extend over a part of the circumference of the circumferential part 335 in a manner corresponding to the protrusion 324. A gas passageway P3 between the internal structure 330 and the outer cap 310 is formed by making a part of an inner surface of the outer cap base part 315 sunken.

With the structure according to this second embodiment, during use, the tube member 200 is connected by screw-thread to the outer cap 310, and an end of the tube member 200 abuts a seal 390 of the internal structure 330 in a sealed fashion. When gas pressure in the tube member 200 rises to a predetermined gas pressure value, gas in the tube member 200 flows through the central hole 342, then flows in the opposite direction along the gas flow guiding part 312, and after passing the gas flow guiding part 312, is discharged to the external air via the third, second and first gas passageways P3, P2 and P1; a gas discharge channel is thereby formed. Due to the provision of the gas flow guiding part 312, gas must flow away from the outer cap base part 315 in a curved fashion after flowing through the central hole 342; a small amount of liquid entrained therein can be separated out and fall onto the radial base part 375, and then enter the vent holes 372 and flow back to the reservoir, so the effect of preventing brake fluid leakage is achieved.

Likewise, the gas discharge channel described above may also be used as a gas intake channel for air to enter the reservoir from the surroundings. External air enters a space between the internal structure 330 and the outer cap 310 via the first, second and third gas passageways PI, P2 and P3; one portion enters the reservoir via the central hole 342, and another portion enters the reservoir via the one-way vent holes 372.

Cap assembly structures according to preferred embodiments of the present invention have been described above, but it should be understood that the present invention is not limited to the specific structures shown in the figures and described above, but includes amendments, substitutions or changes which would be obvious to and might be imagined by those skilled in the art after reading the above description, for example:
In the embodiments shown in the drawings, the third gas passageway between the outer cap and the end of the internal structure close to the outer cap base part is only located on a part of the circumference of mating faces of the two components in the circumferential direction, i.e. only on the second vent side of the outer cap; however, those skilled in the art should understand that this is not necessary, and it is also possible for the third gas passageway to be formed over the entire circumferential direction of an interface between the internal structure and the outer cap.

In the embodiments shown in the drawings, the gas flow guiding part located on the outer cap has the effect of providing a labyrinthine curve for the gas discharge path and thereby isolating liquid contained in discharged gas to the greatest extent possible; therefore the outer cap could also comprise multiple gas flow guiding parts, arranged to be spaced apart radially or circumferentially, so that the gas discharge path comprises multiple curved parts.

In the embodiments shown in the drawings, the gas flow guiding part extends in the axial direction; optionally, the gas flow guiding part could also extend obliquely at an angle to the axial direction, and similarly, the stop part could also project in any direction and in any way from the outer cap base part as shown in the figures; the gas flow guiding part or the stop part could also be provided as a component which is formed separately and subsequently attached to the cap assembly.

In the embodiments shown in the drawings, the gas flow guiding part is disposed on the outer cap; optionally, the gas flow guiding part may be disposed on another constituent component or be constructed as a separate component.

In the embodiments shown in the drawings, the function of the one-way vent hole is realized by covering a through-hole with a membrane member having the function of one-way passage of gas; optionally, any other method capable of achieving the same effect may be used.

The one-way vent hole and two-way vent hole are not limited to the hole forms shown in the figures; the quantity, shape, dimensions and arrangement of the vent holes may be changed without affecting function.

The present invention also relates to a reservoir comprising the cap assembly described above; the reservoir comprises an inlet tube member for introducing brake fluid, and the cap assembly described above; when mated with each other, the cap assembly and the inlet tube member prevent liquid in the reservoir from leaking, allow external air to enter the reservoir, and allow air in the reservoir to be discharged to external air. The reservoir may be a brake fluid reservoir for a vehicle.

Without deviating from the substance and scope of the present invention, those skilled in the art could still make amendments and substitutions to various details. The scope of protection of the present invention is defined by the claims alone.

## Claims

1. Cap assembly, comprising:
an outer cap (10), defining a central axis and comprising an outer cap base part and an outer cap peripheral part which projects substantially perpendicularly from a periphery of the outer cap base part to define an internal space; and
an internal structure (30) supported in the internal space, with a gas passageway in communication with external air being defined between the internal structure (30) and the outer cap (10), the internal structure **characterised by** comprising a two-way vent hole (52) extending to the vicinity of the outer cap base part in an axial direction extending along the central axis and a one-way vent hole (42) disposed remotely from the outer cap base part in the axial direction,
the two-way vent hole (52) being constructed to allow air in a tube member to be discharged into external air via the two-way vent hole (52) and the gas passageway, thereby defining a gas discharge path, when the tube member is mounted to the cap assembly in a gas-tight fashion, and being constructed to allow external air to enter the tube member via the gas passageway and the two-way vent hole (52), thereby defining a first gas intake path; and the one-way vent hole (42) being constructed to allow external air to enter the tube member via the gas passageway and the one-way vent hole (42), thereby defining a second gas intake path, but to prohibit air in the tube member from being discharged into external air via the one-way vent hole (42).

2. Cap assembly according to Claim 1, wherein the cap assembly further comprises a gas flow guiding part (12) for guiding a gas flow away from the outer cap base part.

3. Cap assembly according to Claim 2, wherein the gas flow guiding part (12) is a substantially tubular structure projecting from the outer cap base part towards the internal structure in such a way as to surround the two-way vent hole (52), with the two-way vent hole (52) extending into the substantially tubular structure.

4. Cap assembly according to Claim 3, wherein the substantially tubular structure comprises a first end connected to the outer cap base part and an opposite free end, and comprises, at the free end, a vent slot running radially through the thickness thereof.

5. Cap assembly according to Claim 4, wherein the outer cap further comprises a stop part (16) projecting from the outer cap base part towards the internal structure.

6. Cap assembly according to any one of Claims 1 - 5, wherein in at least a part of a circumferential direction, an end of the internal structure close to the outer cap base part and an inner surface of the outer cap base part are not in contact with each other and form a radial part of the gas passageway.

7. Cap assembly according to any one of Claims 1 - 6, wherein the internal structure comprises a radial base part providing the one-way vent hole, a radial abutment part adapted to abut a tube member, and a circumferential part extending from the radial abutment part towards the outer cap base part, the circumferential part comprising a mating structure for mating with the outer cap.

8. Cap assembly according to Claim 7, wherein the one-way vent hole (42) is formed by using an annular membrane member only allowing one-way passage of gas to cover a through-hole running axially through the radial base part.

9. Cap assembly according to Claim 7 or 8, wherein the mating structure is a hook-like part projecting radially outward from the circumferential part, the outer cap correspondingly comprises a protrusion protruding radially inward from an inner peripheral surface of the outer cap peripheral part, and at least one of the protrusion and the hook-like part does not extend over the entire circumferential direction so as to form an axial part of the gas passageway.

10. Cap assembly according to any one of Claims 7 - 9, wherein the internal structure (30) comprises a columnar part extending in the axial direction from the radial base part to the vicinity of the outer cap base part, and the two-way vent hole is a through-hole running through the columnar part in the axial direction.

11. Cap assembly according to any one of Claims 7 - 10, wherein the internal structure (30) is constructed in the form of a single component, the single component comprising a barrel part connecting the radial base part to the radial abutment part.

12. Cap assembly according to any one of Claims 7 - 10, wherein the internal structure (30) comprises a supporting component providing the radial abutment part and the circumferential part, and a stopper-like member supported by means of the supporting component and providing the radial base part, with the supporting component further comprising another radial base part and a barrel part connected between the other radial base part and the radial abutment part.

13. Cap assembly according to Claim 11 or 12, wherein the barrel part comprises a seal retaining part extending radially outward from an outer peripheral surface thereof.

14. Cap assembly according to Claim 12, wherein the other radial base part of the supporting component comprises an axially penetrating additional vent hole in communication with the one-way vent hole.

15. Cap assembly according to Claim 14, wherein the stopper-like member comprises an outer flange which is fitted in a gas-tight fashion to an inner surface of the barrel part of the supporting component.

16. Cap assembly according to Claim 15, wherein the stopper-like member comprises a mounting lug, and the barrel part of the supporting component comprises a recess for receiving the mounting lug.

17. Cap assembly according to Claims 1 - 16, wherein the cap assembly is adapted for connection to an inlet tube member of a vehicle brake fluid reservoir.

18. Reservoir, comprising an inlet tube member for introducing brake fluid, and the cap assembly according to any one of Claims 1 - 17; when mated with each other, the cap assembly and the inlet tube member prevent liquid in the reservoir from leaking, allow external air to enter the reservoir, and allow air in the reservoir to be discharged to external air.

## Patentansprüche

1. Kappenanordnung, Folgendes umfassend:
eine Außenkappe (10), die eine Mittelachse definiert und einen Außenkappenbasisteil und einen Außenkappenumfangsteil umfasst, der im Wesentlichen senkrecht vom Umfang des Außenkappenbasisteils absteht, um einen Innenraum zu definieren; und
eine Innenstruktur (30), die im Innenraum getragen wird, mit einem mit der Umgebungsluft verbundenen Gasdurchgang, der zwischen der Innenstruktur (30) und der Außenkappe (10) definiert ist, wobei die Innenstruktur **dadurch gekennzeichnet ist, dass** sie eine Zweiwegelüftungsbohrung (52), die sich in Axialrichtung entlang der Mittelachse in die Nähe des Außenkappenbasisteils erstreckt, und eine Einweglüftungsbohrung (42), die vom Außenkappenbasisteil in Axialrichtung entfernt angeordnet ist, umfasst,
wobei die Zweiwegelüftungsbohrung (52) dazu konstruiert ist, zuzulassen, dass Luft in einem Rohrelement über die Zweiwegelüftungsbohrung (52) und den Gasdurchgang an die Umgebungsluft abgelassen wird, wodurch ein Gasablassweg definiert wird, wenn das Rohrelement gasdicht an der Kappenanordnung montiert ist, und dazu konstruiert ist, zuzulassen, dass Außenluft über den Gasdurchlass und die Zweiwegelüftungsbohrung (52) in das Rohrelement eintritt, wodurch ein erster Gaseinlassweg definiert wird; und wobei die Einweglüftungsbohrung (42) dazu konstruiert ist, zuzulassen, dass Umgebungsluft über den Gasdurchgang und die Einweglüftungsbohrung (42) in das Rohrelement eintritt, wodurch ein zweiter Gaseinlassweg definiert wird, jedoch zu verhindern, dass Luft im Rohrelement über die Einweglüftungsbohrung (42) an die Umgebungsluft abgelassen wird.

2. Kappenanordnung nach Anspruch 1, wobei die Kappenanordnung ferner einen Gasstromführungsteil (12) umfasst, um den Gasstrom vom Außenkappenbasisteil weg zu führen.

3. Kappenanordnung nach Anspruch 2, wobei der Gasstromführungsteil (12) eine im Wesentlichen rohrförmige Struktur ist, die vom Außenkappenbasisteil in Richtung der Innenstruktur derart vorsteht, dass er die Zweiwegelüftungsbohrung (52) umgibt, wobei sich die Zweiwegelüftungsbohrung (52) in die im Wesentlichen rohrförmige Struktur erstreckt.

4. Kappenanordnung nach Anspruch 3, wobei die im Wesentlichen rohrförmige Struktur ein erstes Ende, das mit dem Außenkappenbasisteil verbunden ist, und ein entgegengesetztes freies Ende umfasst und am freien Ende einen Lüftungsschlitz umfasst, der radial durch dessen Stärke verläuft.

5. Kappenanordnung nach Anspruch 4, wobei die Außenkappe ferner einen Anschlagteil (16) umfasst, der vom Außenkappenbasisteil in Richtung der Innenstruktur vorsteht.

6. Kappenanordnung nach einem der Ansprüche 1-5, wobei zumindest in einem Teil einer Umfangsrichtung ein Ende der Innenstruktur, das sich in der Nähe des Außenkappenbasisteils befindet, und eine Innenfläche des Außenkappenbasisteils nicht miteinander in Kontakt stehen und einen radialen Teil des Gasdurchgangs ausbilden.

7. Kappenanordnung nach einem der Ansprüche 1-6, wobei die Innenstruktur einen radialen Basisteil umfasst, der die Einweglüftungsbohrung, einen radialen Anschlagteil, der dazu eingerichtet ist, an ein Rohrelement anzuschlagen, und einen Umfangsteil, der sich vom radialen Anschlagteil zum Außenkappenbasisteil erstreckt, vorsieht, wobei der Umfangsteil eine zur Außenkappe passende Passstruktur umfasst.

8. Kappenanordnung nach Anspruch 7, wobei die Einweglüftungsbohrung (42) ausgebildet wird, indem ein ringförmiges Membranelement verwendet wird, das den Durchgang von Gas nur in eine Richtung zulässt, um eine Durchgangsbohrung, die axial durch den radialen Basisteil verläuft, abzudecken.

9. Kappenanordnung nach Anspruch 7 oder 8, wobei die Passstruktur ein hakenartiger Teil ist, der vom Umfangsteil radial nach außen vorsteht, wobei die Außenkappe einen zugehörigen Vorsprung umfasst, der von einer inneren Umfangsfläche des Außenkappenumfangsteils radial nach innen vorsteht, und sich der Vorsprung und/oder der hakenartige Teil nicht über die gesamte Umfangsrichtung erstreckt, um einen axialen Teil des Gasdurchgangs auszubilden.

10. Kappenanordnung nach einem der Ansprüche 7-9, wobei die Innenstruktur (30) einen säulenförmigen Teil umfasst, der sich in Axialrichtung vom radialen Basisteil in die Nähe des Außenkappenbasisteils erstreckt, und die Zweiwegelüftungsbohrung eine Durchgangsbohrung ist, die in Axialrichtung durch den säulenförmigen Teil verläuft.

11. Kappenanordnung nach einem der Ansprüche 7-10, wobei die Innenstruktur (30) in Form einer einzelnen Komponente konstruiert ist, wobei die einzelne Komponente einen Zylinderteil umfasst, der den radialen Basisteil mit dem radialen Anschlagteil verbindet.

12. Kappenanordnung nach einem der Ansprüche 7-10, wobei die Innenstruktur (30) eine Stützkomponente, die den radialen Anschlagteil und den Umfangsteil vorsieht, und ein stopperartiges Element, das mittels der Stützkomponente getragen wird und den radialen Basisteil vorsieht, umfasst, wobei die Stützkomponente ferner einen weiteren radialen Basisteil und einen Zylinderteil, der zwischen dem anderen radialen Basisteil und dem radialen Anschlagteil verbunden ist, umfasst.

13. Kappenanordnung nach Anspruch 11 oder 12, wobei der Zylinderteil einen Dichtungshalterungsteil umfasst, der sich von einer Außenumfangsfläche dessen radial nach außen erstreckt.

14. Kappenanordnung nach Anspruch 12, wobei der andere radiale Basisteil der Stützkomponente eine axial durchdringende zusätzliche Lüftungsbohrung umfasst, die mit der Einweglüftungsbohrung verbunden ist.

15. Kappenanordnung nach Anspruch 14, wobei das stopperartige Element einen Außenflansch umfasst, der gasdicht an einer Innenfläche des Zylinderteils der Stützkomponente befestigt ist.

16. Kappenanordnung nach Anspruch 15, wobei das stopperartige Element eine Montagelasche umfasst und der Zylinderteil der Stützkomponente eine Aussparung zur Aufnahme der Montagelasche umfasst.

17. Kappenanordnung nach einem der Ansprüche 1-16, wobei die Kappenanordnung dazu eingerichtet ist, sich mit einem Einlassrohrelement eines Fahrzeugbremsfluidspeichers zu verbinden.

18. Speicher, ein Einlassrohrelement zum Einleiten von Bremsfluid und die Kappenanordnung nach einem der Ansprüche 1-17 umfassend; wobei, wenn sie miteinander verbunden sind, die Kappenanordnung und das Einlassrohrelement verhindern, dass Flüssigkeit im Speicher ausläuft, zulassen, dass Umgebungsluft in den Speicher eintritt, und zulassen, dass Luft im Speicher an die Umgebungsluft abgelassen wird.

## Revendications

1. Ensemble de bonnet comprenant :
un bonnet extérieur (10) qui définit un axe central et qui comprend une partie de base de bonnet extérieur et une partie périphérique de bonnet extérieur qui déborde essentiellement à la perpendiculaire de la périphérie de la partie de base de bonnet extérieur de manière à définir un espace intérieur et
une structure intérieure (30) soutenue dans l'espace intérieur, avec un passage pour gaz communiquant avec l'air extérieur, défini entre un structure intérieure (30) et le bonnet extérieur (10), la structure intérieure étant **caractérisée en ce que**
elle comprend un trou d'évent bidirectionnel (52) qui s'étend au voisinage de la partie de base de bonnet extérieur dans une direction axiale s'étendant le long de l'axe central et un trou d'évent unidirectionnel (42) disposé à distance de la partie de base de bonnet extérieur dans la direction axiale,
le trou d'évent bidirectionnel (52) étant construit de manière à permettre le déchargement de l'air présent dans un élément tubulaire vers l'air extérieur par l'intermédiaire du trou d'évent bidirectionnel (52) et le passage pour gaz, pour ainsi définir un parcours de décharge de gaz lorsque l'élément tubulaire est monté sur l'ensemble de bonnet de manière étanche au gaz, et étant construit de manière à permettre à l'air extérieur de pénétrer dans l'élément tubulaire par l'intermédiaire du passage pour gaz et le trou d'évent bidirectionnel (52), pour ainsi définir un premier parcours d'admission de gaz, et
**en ce que** le trou d'évent unidirectionnel (42) est construit de manière à permettre à l'air extérieur de pénétrer dans l'élément tubulaire par l'intermédiaire du passage pour gaz et du trou d'évent unidirectionnel (42) pour ainsi définir un deuxième parcours d'admission de gaz tout en empêchant que l'air présent dans l'élément tubulaire soit déchargé dans l'air extérieur par le trou d'évent unidirectionnel (42).

2. Ensemble de bonnet selon la revendication 1, dans lequel l'ensemble de bonnet comprend en outre une partie (12) de guidage de l'écoulement de gaz qui guide l'écoulement de gaz quittant la partie de base de bonnet extérieur.

3. Ensemble de bonnet selon la revendication 2, dans lequel la partie (12) de guidage de l'écoulement de gaz est une structure essentiellement tubulaire qui déborde de la partie de base de bonnet extérieur en direction de la structure intérieure de manière à entourer le trou d'évent bidirectionnel (52), le trou d'évent bidirectionnel (52) s'étendant dans la structure essentiellement tubulaire.

4. Ensemble de bonnet selon la revendication 3, dans lequel la structure essentiellement tubulaire comprend une première extrémité raccordée à la partie de base de bonnet extérieur et une extrémité libre opposée, et comprend à l'extrémité libre une fente d'évent qui s'étend radialement dans son épaisseur.

5. Ensemble de bonnet selon la revendication 4, dans lequel le bonnet extérieur comprend en outre une partie d'arrêt (16) qui déborde de la partie de base de bonnet extérieur en direction de la structure intérieure.

6. Ensemble de bonnet selon l'une quelconque des revendications 1 à 5, dans lequel dans au moins une partie de la direction périphérique, une extrémité de la structure intérieure proche de la partie de base de bonnet extérieur et une surface intérieure de la partie de base de bonnet extérieur ne sont pas en contact l'une avec l'autre et forment une partie radiale du passage pour les gaz.

7. Ensemble de bonnet selon l'une quelconque des revendications 1 à 6, dans lequel la structure intérieure comprend une partie radiale de base qui forme le trou d'évent unidirectionnel, une partie radiale de butée adaptée pour venir buter contre un élément tubulaire et une partie périphérique qui s'étend depuis la partie radiale de butée en direction de la partie de base de bonnet extérieur, la partie périphérique comprenant une structure de mise en correspondance qui assure la mise en correspondance avec le bonnet extérieur.

8. Ensemble de bonnet selon la revendication 7, dans lequel le trou d'évent unidirectionnel (42) est formé en utilisant un élément annulaire en membrane qui permet uniquement un passage de gaz unidirectionnel de manière à couvrir une perforation qui s'étend axialement dans la partie radiale de base.

9. Ensemble de bonnet selon les revendications 7 ou 8, dans lequel la structure de mise en correspondance est une partie en forme de crochet qui déborde radialement vers l'extérieur depuis la partie périphérique, le bonnet extérieur comprenant en correspondance une saillie qui déborde radialement vers l'intérieur depuis la surface périphérique intérieure de la partie périphérique du bonnet extérieur et la saillie et/ou la partie en forme de crochet ne s'étendent pas sur toute la direction périphérique de manière à former une partie axiale du passage pour les gaz.

10. Ensemble de bonnet selon l'une quelconque des revendications 7 à 9, dans lequel la structure intérieure (30) comprend une partie en colonne qui s'étend dans la direction axiale depuis la partie radiale de base jusqu'au voisinage de la partie de base de bonnet extérieur, le trou d'évent bidirectionnel étant une perforation qui traverse la partie en colonne dans sa direction axiale.

11. Ensemble de bonnet selon l'une quelconque des revendications 7 à 10, dans lequel la structure intérieure (30) est construite sous la forme d'un composant unique, le composant unique comprenant une partie en tonneau reliée à la partie radiale de base à la partie radiale de butée.

12. Ensemble de bonnet selon l'une quelconque des revendications 7 à 10, dans lequel la structure intérieure (30) comprend un composant de soutien qui forme la partie de butée radiale et la partie périphérique, et un élément en forme de bouchon soutenu au moyen du composant de soutien et formant la partie radiale de base, le composant de soutien comprenant en outre une autre partie radiale de base et une partie en tonneau reliée entre l'autre partie radiale de base et la partie radiale de butée.

13. Ensemble de bonnet selon l'une quelconque des revendications 11 ou 12, dans lequel la partie en tonneau comprend une partie de retenue de joint d'étanchéité qui s'étend radialement vers l'extérieur depuis sa surface périphérique extérieure.

14. Ensemble de bonnet selon la revendication 12, dans lequel l'autre partie radiale de base du composant de soutien comprend un trou d'évent supplémentaire s'étendant axialement et communiquant avec le trou d'évent unidirectionnel.

15. Ensemble de bonnet selon la revendication 14, dans lequel l'élément en forme de bouchon comprend une bride extérieure placée de manière étanche au gaz sur une surface intérieure de la partie en tonneau du composant de soutien.

16. Ensemble de bonnet selon la revendication 15, dans lequel l'élément en forme de bouchon comprend une patte de montage et la partie en tonneau du composant de soutien comprend un creux qui reçoit la patte de montage.

17. Ensemble de bonnet selon les revendications 1 à 16, dans lequel l'ensemble de bonnet est adapté pour être raccordé à un élément de tube d'entrée d'un réservoir de fluide de freinage d'un véhicule.

18. Réservoir comprenant un élément tubulaire d'entrée permettant d'introduire du fluide de freinage et l'ensemble de bonnet selon l'une quelconque des revendications 1 à 17 et dans lequel, lorsque l'ensemble de bonnet et l'élément tubulaire d'entrée sont accordés l'un à l'autre, ils empêchent le liquide présent dans le réservoir de fuir, permettent à l'air extérieur d'entrer dans le réservoir et permettent à l'air présent dans le réservoir à être déchargé dans l'air extérieur.
